Europäisches Patentamt

European Patent Office

Office européen des brevets

(11) Publication number: **0 085 206**
**B1**

(12) **EUROPEAN PATENT SPECIFICATION**

(45) Date of publication of patent specification: **05.06.85**

(21) Application number: **82300441.1**

(22) Date of filing: **28.01.82**

(51) Int. Cl.⁴: **B 01 D 45/08, B 01 D 45/16**

(54) **Separator for compressed air.**

(43) Date of publication of application:
**10.08.83 Bulletin 83/32**

(45) Publication of the grant of the patent:
**05.06.85 Bulletin 85/23**

(84) Designated Contracting States:
**DE FR GB IT**

(56) References cited:
**DE-B-2 340 195**
**US-A-4 226 671**

(73) Proprietor: **Chang, Ying-Chung**
**92 San Min Rd. Sec. 2**
**Taichung (TW)**

(72) Inventor: **Chang, Ying-Chung**
**92 San Min Rd. Sec. 2**
**Taichung (TW)**

(74) Representative: **Harrison, David Christopher**
**et al**
**MEWBURN ELLIS & CO 2/3 Cursitor Street**
**London EC4A 1BQ (GB)**

Courier Press, Leamington Spa, England.

## Description

The present invention relates to a separator for an air compressor which separates impurities such as water vapour or oil from an air stream.

Separators are now commonly installed into air compressor systems for filtering the air in the system so that it is free from impurities. There are three main types of separator:
    (i) cooling type;
    (ii) metal plate compartment type; and
    (iii) net-grid type.

Each of these types of separator has problems or disadvantages. The cooling separator requires a large amount of energy to operate and is therefore unsuitable for commercial use. The metal plate separator has a low filtering efficiency and thus cannot be used in conjunction with industrial pneumatic tools. The net-grid separator has a poor filtering efficiency so that water vapour or oil gas remains in the air after it has passed through the separator. If the air is then passed to a spray gun, for example, water or oil still contained in the air may be discharged from the gun together with the desired material. Also, with the net-grid separator, oil, dirt or other foreign substances build up on the net-grid after prolonged use which reduces the efficiency of the circulation of the air and hence the efficiency of the performance of the separator.

The present invention seeks to provide a separator which overcomes or at least ameliorates these problems. It utilises the condensation occurring when an air stream is deflected to remove water vapour and oil gas from compressed air.

In accordance with the invention this is achieved by a separator for compressed air comprising:

a first condensation part in the form of a hollow conically-converging cover member;

an inlet for the compressed air having an outlet orifice directed towards the inner surface of the conically-converging cover member, such that, in use, air from the outlet orifice of the inlet is directed onto the inner surface of the conically-converging cover member and is deflected thereby;

an air-flow guide extending around the first condensation part and at least a part of the inlet, at least part of the guide being in the form of a convoluted bore; and

a second condensation part adjacent to but spaced from an end of the convoluted bore such that, in use, compressed air passing through the convoluted bore is directed onto the second condensation part and is deflected thereby.

An embodiment of the invention will now be described, by way of example, with reference to the accompanying drawings, in which:

Figure 1 is an elevation view of a separator according to the present invention;

Figure 2 is a sectional view through the separator of Figure 1; and

Figure 3 is a detail of part of the separator of Figure 2.

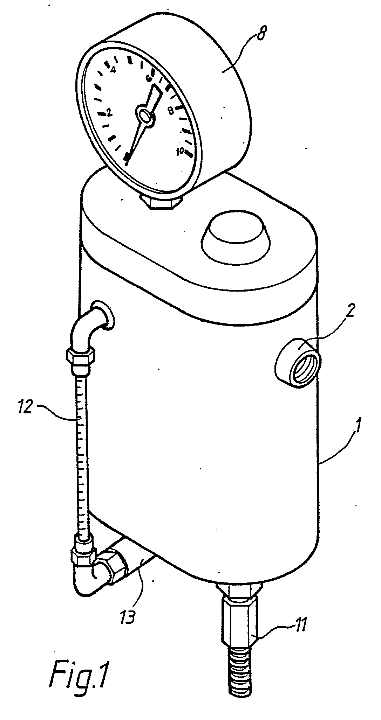

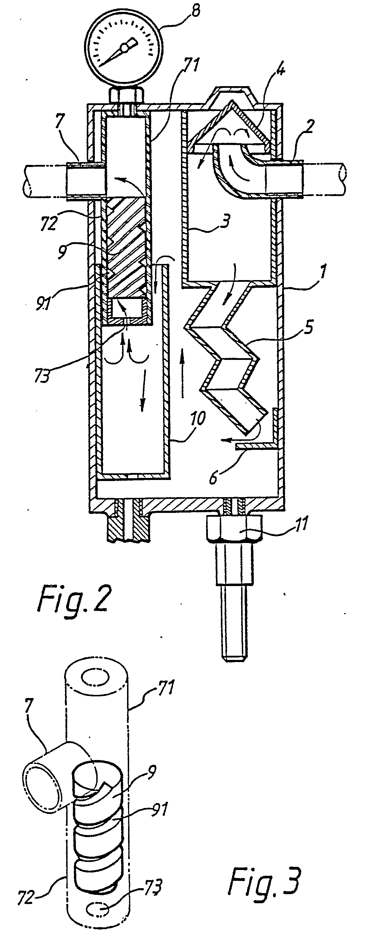

Referring first to Figure 1, a separator according to the present invention has a body having a casing 1 with an ellipsoid cross section with an air intake pipe 2 on one side of the casing 1. The intake pipe 2 is L-shaped and passes into a cylindrical protective sleeve 3 and extends into the centre of the wider end of a conical cover 4. The cover 4 is located above one end of the intake pipe 2 inside the casing and the outer edge of the cover 4 is protected by the sleeve 3 which is a hermitically closed structure. The bottom of the sleeve 3 is connected to a bore in form of a zig-zag shaped tube 5, the convoluted path of which causes further condensation. An L-shaped deflection plate 6 made, e.g., of iron is located opposite the outlet of the tube 5 which acts as an additional converger and separator of the water vapour and oil gas in the air. An air outlet pipe 7 is installed on another face of the casing 1 has a "T" shaped part inside the casing 1, the stem of the "T" extending out of the casing 1. A pressure meter 8 is installed at the end of the upper arm 71 of the cross piece of the "T" shaped air outlet pipe. The meter 8 is located outside the casing 1 so that the pressure of the compressed air released from the air outlet pipe 7 can be monitored. A plug in the form of a screw rod 9 is provided in the lower arm 72 of the cross-piece of the outlet pipe 7 so that there is only a narrow convoluted passage formed by the slot 91 of the screw rod 9 between the upper arm 71 of the outlet pipe 7 and the end of the lower arm 72 (see Fig. 3). The end of the lower arm 72 is sealed except for a hole 73, and is located within a cylindrical pipe 10.

A draining control switch 11 for draining the liquid (waste liquid of mixed water and oil) accumulated inside of the casing is installed below the bottom edge of the casing 1. A connecting pipe 13 (Fig. 1) extends from the outer wall of the casing at the lower end thereof and is connected to a transparent high-pressure pipe 12 outside the casing 1. This pipe 12 permits observation of the volume of liquid of mixed water and oil accumulated in the air separator, so that it can be seen when it is necessary to drain the casing 1.

The operation of the separator will now be described.

The separator is connected to an air compressor and to a pneumatic tool via the air intake pipe 2 and the air outlet pipe 7 respectively. The air compressor compresses the air (containing a large volume of aqueous vapour and oil gas) and discharges it into the casing 1 via the air intake pipe 2 where the air contacts the conical cover 4.

When air comes into contact with the cover 4, the air flow is blocked and, due to the compression force of the air and the hermatically closed structure of the sleeve 3, water vapour and oil are condensed. The condensed water vapour and oil form droplets on the walls of the cover 4, and flow along the walls of the tube 5 to the bottom of the casing 1. This process removes most of the water vapour and oil from the compressed air. The air is deflected by the cover 4 and passes out of the sleeve 3 into the zig-zag shaped tube 5. On emerging from the tube 5, the air encounters the L-shaped plate 6 which again blocks the air flow, causing most of the residual water vapour and oil to be condensed. In this way, the amount of water vapour and oil in the air is reduced to a very small amount.

The compressed air with water vapour and oil gas removed by the cover 4, the zig-zag shaped tube 5 and the L-shaped plate 6, and escapes from the air outlet pipe 7 through the cylindrical pipe 10. However, when the air enters into the air outlet pipe 7 from the opening 73 and passes along the screw slot 91 of the screw rod 9 in the lower arm 72 of the pipe 7, it is again blocked and the (already small) volume of moisture and oil in the air is condensed into water and oil droplets which drop down to the bottom of the casing 1. Therefore, virtually all the aqueous vapour and oil gas contained in the air will have been eliminated before it passes out of the outlet pipe 7. This elimination of oil and water vapour increases the useful life of the pneumatic tool, to which the pipe 7 is connected.

The water and oil drops flowing down to the bottom of the casing 1 will slowly accumulate into a volume which can be observed through the transparent high-pressure pipe 12 so that it can be drained from the bottom of the casing 1 by means of a draining control 11.

### Claims

1. A separator for compressed air, to separate impurities from the air by condensation, comprising:

a first condensation part in the form of a hollow conically-converging cover member (4);

an inlet (2) for the compressed air having an outlet orifice directed towards the inner surface of the conically-converging cover member (4), such that, in use, air from the outlet orifice of the inlet (2) is directed onto the inner surface of the conically-converging cover member (4) and is deflected thereby;

an air-flow guide (3, 5) extending around the first condensation part and at least a part of the inlet (2), at least part of the guide being in the form of a convoluted bore (5); and

a second condensation part (6) adjacent to but spaced from an end of the convoluted bore (5) such that, in use, compressed air passing through the convoluted bore (5) is directed onto the second condensation part (6) and is deflected thereby.

2. A separator according to Claim 1, wherein the second condensation part (6) is an angled plate.

3. A separator according to Claim 1, or Claim 2, having a third condensation part comprising an outer member (7) and an inner member (9) forming therebetween a convoluted passage (91) for air such that, in use, air from the second condensation part (6) passes through the convoluted passage (91) and is deflected around that passage (91).

4. A separator according to Claim 3, wherein the outer member (7) of the third condensation part is a tube (71, 72) having a pressure meter (8) connected to one end (71), and the inner member (9) is a plug having a screw thread forming the convoluted passage (91) on its outer surface, the inner member being continued within the end (72) of the tube farthest from the pressure meter (8), there being an outlet for condensed air at an intermediate point along the tube (7).

5. A separator according to any one of Claims 1 to 4 having a casing (1) surrounding the said condensation parts, the casing having an outlet (11) for draining liquid condensed in the casing (1).

6. A separator according to Claim 5, having means (12, 13) for indicating the quantity of liquid condensed in the casing.

7. A separator according to Claim 6, wherein the means (12, 13) for indicating the quantity of liquid in the casing comprises a tube (12) extending from the casing (1) and being in communication with the interior of the casing (1), at least a part of the tube (12) being transparent.

### Patentansprüche

1. Abscheider für Druckluft zum Abscheiden von Verunreinigungen aus der Luft durch Kondensation, bestehend ans

ein erstes Kondensationsteil in Form eines hohlen konisch konvergierenden Deckelteils (4),

einen Einlaß (2) für die Druckluft, der eine der Innenfläche des konisch konvergierenden Deckelteils (4) zugekehrte Auslaßöffnung aufweist, so daß beim Gebrauch die aus der Auslaßöffnung des Einlasses (2) austretende Luft auf die Innenfläche des konisch konvergierenden Deckelteils (4) auftrifft und dadurch abgelenkt wird,

eine Führung (3, 5) für den Luftstrom, die das erste Kondensationsteil und zumindest einen Teil des Einlasses (2) umgibt, wobei zumindest ein Teil der Führung die Form einer gewundenen Bohrung (5) hat, und

ein zweites Kondensationsteil (6), das neben, aber im Abstand von einem Ende der gewundenen Bohrung (5) angeordnet ist, so daß beim Gebrauch die durch die gewundene Bohrung (5) hindurchströmende Druckluft auf das zwiete Kondensationsteil (6) auftrifft und dadurch abgelenkt wird.

2. Abscheider nach Anspruch 1, wobei das zweite Kondensationsteil (6) eine abgewinkelte Platte ist.

3. Abscheider nach Anspruch 1 oder 2, gekennzeichnet durch ein drittes Kondensationsteil, bestehend aus einem äußeren Bauteil (7) und einem inneren Bauteil (9) die zwischen sich einen gewundenen Kanal (91) für die Luft bilden, so daß beim Gebrauch die vom zweiten Kondensationsteil (6) kommende Luft durch den gewundenen Kanal (91) hindurchströmt und um den Kanal (91) herum abgelenkt wird.

4. Abscheider nach Anspruch 3, wobei das äußere Bauteil (7) des dritten Kondensationsteils ein Rohr (71, 72) ist, mit dessen einem Ende (71) ein Druckanzeiger (8) verbunden ist, und wobei das innere Bauteil (9) ein Stopfen ist, der an seiner Außenfläche ein den gewundenen Kanal (91) bildendes Gewinde hat, und wobei das innere Bauteil innerhalb des vom Druckanzeiger (8) abliegenden Endes (72) des Rohres angeordnet ist, und wobei in einem mittleren Bereich des Rohres (7) ein Auslaß für kondensierte Luft vorhanden ist.

5. Abscheider nach einem der Ansprüche 1 bis 4, gekennzeichnet durch ein die Kondensationsteile umgebendes Gehäuse (1), das einen Auslaß (11) zum Ableiten der in dem Gehäuse kondensierten Flüssigkeit aufweist.

6. Abscheider nach Anspruch 5, gekennzeichnet durch eine Einrichtung (12, 13) zum Anzeigen der in dem Gehäuse kondensierten Flüssigkeitsmenge.

7. Abscheider nach Anspruch 6, wobei die Einrichtung (12, 13) zum Anzeigen der in dem Gehäuse befindlichen Flüssigkeitsmenge aus einem Rohr (12) besteht, das aus dem Gehäuse (1) herausragt und mit dem Inneren des Gehäuses (1) in Verbindung steht, wobie zumindest ein Teil des Rohres (12) durchsichtig ist.

**Revendications**

1. Séparateur pour de l'air comprimé, pour séparer les impuretés de l'air par condensation, comprenant

une première partie de condensation sous la forme d'un organe creux formant couvercle coniquement convergent (4);

une entrée (2) de l'air comprimé ayant un orifice de sortie dirigé vers la surface interne de l'organe formant couvercle coniquement convergent (4) de façon qu'en utilisation l'air de l'orifice de sortie de l'entrée (2) soit dirigé sur la surface interne de l'organe formant couvercle coniquement convergent (4) et soit ainsi dévié;

un guidage d'écoulement d'air (3, 5) s'étendant autour de la première partie de condensation et au moins d'une partie de l'entrée (2), au moins une partie du guidage ayant la forme d'un parçage convoluté (5); et

une seconde partie de condensation (6) adjacente mais espacée d'une extrémité du perçage convoluté (5) de façon qu'en utilisation l'air comprimé traversant le passage convoluté (5) soit dirigé sur la seconde partie de condensation (6) et soit ainsi dévié.

2. Séparateur selon la revendication 1, où la seconde partie de condensation (6) est une plaque en angle.

3. Séparateur selon la revendication 1 ou la revendication 2 ayant une troisième partie de condensation comprenant un organe externe (7) et un organe interne (9) formant entre eux un passage convoluté (91) pour l'air de façon qu'en utilisation, l'air de la seconde partie de condensation (6) traverse le passage convoluté (91) et soit dévié autour de ce passage (91).

4. Séparateur selon la revendication 3 où l'organe externe (7) de la troisième partie de condensation est un tube (71, 72) ayant un manometre (8) connecté à une extrémité (71) et l'organe interne (9) est un bouchon ayant un filetage formant le passage convoluté (91) sur sa surface externe, l'organe interne étant continu avec l'extrémité (72) du tube la plus éloignée du manomètre (8), une sortie de l'air condensé étant prévue en un point intermédiaire le long du tube (7).

5. Séparateur selon l'une quelconque des revendications 1 à 4 ayant un boîtier (1) entourant lesdites parties de condensation, le boîtier ayant une sortie (11) pour drainer le liquide condensé dans le boîtier (1).

6. Séparateur selon la revendication 5 ayant un moyen (12, 13) pour indiquer la quantité de liquide condensé dans le boîtier.

7. Séparateur selon la revendication 6, où le moyen (12, 13) pour indiquer la quantité du liquide dans le boîtier comprend un tube (12) qui s'étend du boîtier (1) et qui est en communication avec l'intérieur du boîtier (1), au moins une partie du tube (12) étant transparente.

*Fig.1*

*Fig.2*

*Fig.3*